# EUROPEAN PATENT SPECIFICATION

(11) **EP 2 013 486 B1**
(45) Date of publication and mention of the grant of the patent: **10.11.2010**
(21) Application number: 07748045.7
(22) Date of filing: 20.04.2007
(51) Int. Cl.: F04F 5/52, B65G 47/91, B66C 1/02, F15C 1/14, G06D 1/10

(54) **A VACUUM UNIT, A SYSTEM COMPRISING SUCH VACUUM UNIT, AND A METHOD OF OPERATING A VACUUM UNIT**
VAKUUMEINRICHTUNG, SYSTEM MIT DERARTIGER VAKUUMEINRICHTUNG UND VERFAHREN FÜR DEN BETRIEB EINER VAKUUMEINRICHTUNG
UNITÉ À VIDE, SYSTÈME COMPRENANT L'UNITÉ À VIDE ET PROCÉDÉ DE FONCTIONNEMENT D'UNE UNITÉ À VIDE

(30) Priority: 28.04.2006 SE 0600941
(43) Date of publication of application: 14.01.2009
(73) Proprietor: AVAC Vakuumteknik AB, 565 21 Mullsjö (SE)
(72) Inventor: JOHANSSON, Håkan, 117 33 Stockholm (SE); CASINGE, Tom, 565 32 Mullsjö (SE)
(74) Representative: Wennborg, Johan
(86) International application number: PCT/SE2007/000380
(87) International publication number: WO 2007/126356

(56) References cited:
- US-A- 3 181 563
- US-A- 3 259 314
- US-A- 3 423 119
- US-A- 3 568 959
- US-A- 5 201 560

## Description

### TECHNICAL FIELD

The present invention relates to a unit for generating, maintaining and eliminating a vacuum. The invention also relates to a system that includes a vacuum unit constructed in accordance with the invention and a method of operating the same.

### BACKGROUND

Vacuum ejectors that work in accordance with the so-called Venturi principle are known to the art and are used to generate a sub-pressure, e.g., for use in a work gripping tool with vacuum cups or in a tank connected thereto. By vacuum is meant in this context the state of a gas whose particle density is less than the particle density of the surrounding atmosphere. The state of a gas can also be designated as a vacuum state when its pressure is lower than atmospheric pressure (DIN 28 400). Such ejectors can be used to generate a vacuum that can typically reach 10-kilo-pascal (-0.9 bar, 90% vacuum).

When such an ejector in a vacuum unit is coupled in a work gripping tool there is a need to rapidly switch between creating vacuum, i.e., suction operation, and releasing vacuum in the vacuum cup, i.e., release operation. During release operation, a flow of air under pressure is injected to the vacuum cup to relieve the vacuum therein.

The US patents 3,568,959, 5,201,560, 3,423,119, and 3,181,563 all describe different ways of realizing suction and release operation. However, these patents propose the use of external ports, latch circuits, or non-return valves for realising the release operation, which adds to the complexity of the vacuum unit and adds to the time it take to switch from one mode of operation to the other.

### SUMMARY OF THE INVENTION

Accordingly, a primary object of the present invention is to eliminate the aforesaid problems by providing a vacuum unit of the kind described in the introduction that includes fewer components and conduits than known vacuum units.

Another object of the present invention is to provide a vacuum unit wherein switching between operational mode is effected more rapidly than in prior art devices.

Yet another object of the present invention is to provide a vacuum unit wherein the wear of components comprised in the unit is kept to a minimum.

Still another object of the present invention is to provide a system that includes such a vacuum unit.

Still a further object of the present invention is to provide a method of operating such a vacuum unit.

The present invention is based on the insight that the aforesaid objects can be achieved with a vacuum unit in which an air flow can be used for deflecting the air flow creating vacuum, thereby switching from suction operation to release operation.

Thus, there is provided a vacuum unit as defined in appended claim 1. There is also provided a system comprising such a vacuum unit as defined in appended claim 9 and a method of operating a vacuum unit as defined in appended claim 10.

The inventive concept provides a vacuum unit that has fewer component parts and ducts or conduits than earlier units of this kind. Due to the fact that the air flow from the air source can flow all the time, the number of valve operations is kept to a minimum, lessening wear.

Other preferred embodiments will be apparent from the dependent Claims.

### BRIEF DESCRIPTION OF THE DRAWINGS

The present invention will now be described in more detail by way of example, with reference to the accompanying drawings in which:
Fig. 1 is a schematic diagram showing the principles of an ejector comprised in a vacuum unit according to the invention during suction operation;
Fig. 2 is a diagram similar to the one of Fig. 1 but during release operation;
Fig. 3 is an overview of a first embodiment of a vacuum unit according to the invention;
Fig. 4 shows a second embodiment of a vacuum unit according to the invention;
Fig. 5 shows a third embodiment of a vacuum unit according to the invention;
Fig. 6 shows a fourth embodiment of a vacuum unit according to the invention;
Fig. 7 shows a fifth embodiment of a vacuum unit according to the invention; and
Fig. 8 is an overview of a system comprising a vacuum unit according to the invention.

### DETAINED DESCRIPTION OF PREFERRED EMBODIMENTS

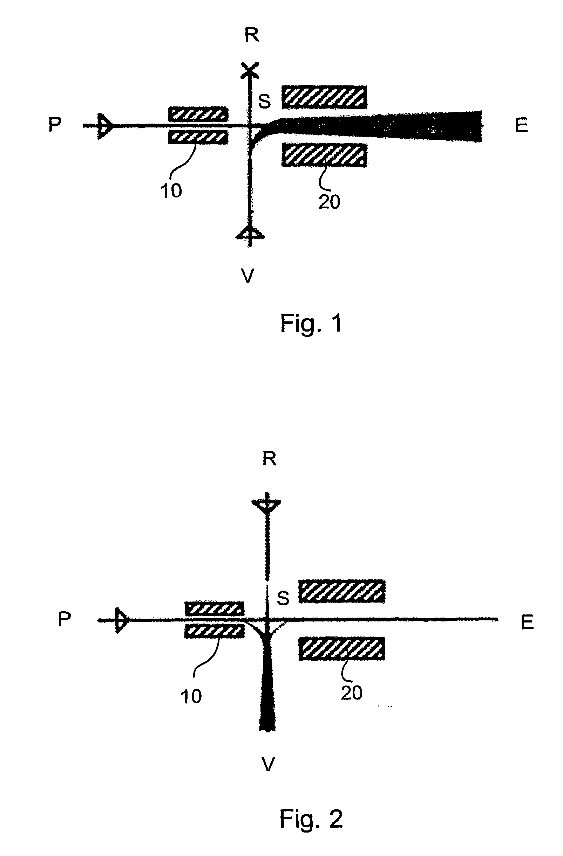

There will now be described preferred embodiments of a vacuum unit according to the invention. However, the general principles of the inventive idea will first be explained with reference to Figs. 1 and 2.

A vacuum unit comprises an ejector having two nozzles shown in the figures: an inlet nozzle 10 and an outlet nozzle 20, wherein the inner diameter of the inlet nozzle is smaller than inner diameter of the outlet nozzle . A plenum or space S is provided between the inlet and outlet nozzles. The input of the inlet nozzle is connected to a source of compressed or pressurized air P while the output of the outlet nozzle is connected to an outlet for exhaust air E. The above mentioned space is connected to a source of release air R which is connected during release operation, as will be described below.

As will be apparent from Fig. 1, when air flows from the inlet nozzle 10 to the outlet nozzle 20 a vacuum is generated in the interior of the ejector and in units that are in communication with this space via a vacuum opening V, as is conventional. Thus, a flow of pressurized air is brought to pass through the inlet nozzle 10, across the space S and into and through the outlet nozzle 20 and onward to the outlet of the exhaust air E. This air flow brings air from the vacuum opening V which is added to the total air flow through the outlet nozzle, creating a vacuum in the interior of the ejector and in units that are in communication with the space S via the vacuum opening V.

Throughout this suction operation, the source of release air R is disconnected from the space S. Thus, the pressurized air P can pass unhindered across the space S and into the second nozzle 20.

Release operation will now be explained with reference to Fig. 2. Like during suction operation, the source of pressurized air P is connected to the inlet nozzle 10. This means that there is a constant flow of air through this nozzle. To the air from the inlet nozzle and into the space S there is added an air flow from the source of release air R. It will be appreciated that also the release air is pressurized and the term "release air" is used for ease of understanding of the invention only.

The release air enters the space S at an angle and preferably essentially at a right angle from the pressurized air P and thereby deflects the air flow from the inlet nozzle away from the input of the outlet nozzle. Thus, instead of passing unhindered to the outlet nozzle 20, at least part of the air flow from the source of pressurized air P will pass on to the vacuum opening V, thereby together with the release air R rapidly creating an overpressure in the vacuum opening. The part of the pressurised air that does not leave through the vacuum opening will leave through the opening for exhaust air E.

Although in the figures the release air R is shown as having a flow direction essentially perpendicular to the flow direction of the pressurized air from the inlet nozzle, other configurations are possible as long as the release air partly or fully deflects the air flow from the input nozzle to the output nozzle and thereby prevents at least part or the air from the input nozzle from reaching the output nozzle.

By means of a comparatively small air flow from the source of release air R, the pressurized air P can be used for providing a very rapid release of e.g., a work piece held by a work gripping tool. This in turn cuts processing times and increases accuracy.

Thanks to the essentially constant air flow through the inlet nozzle 10, the lead time when switching from release operation to suction operation is very short. As soon as the source of release air R is disconnected, the pressurized air P starts creating a vacuum in the vacuum opening V without having to connect the source of pressurized air.

The exact configuration of the nozzles can be found out for different requirements on switching times, pressure etc. In Fig. 2, the pressurized air P has been shown as being deflected at a right angle. In practice, this deflection can be much smaller as long as a part of the pressurized air leaves through the vacuum opening and not through the second nozzle.

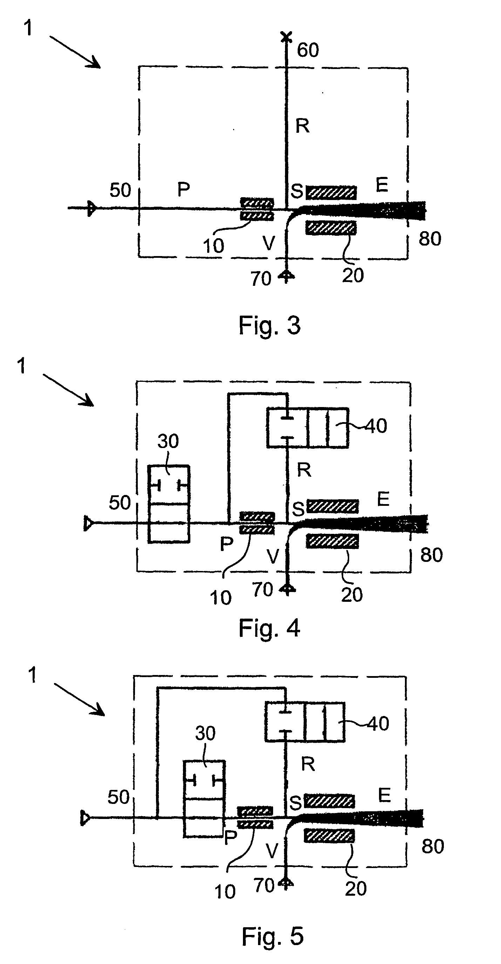

Different embodiments of a vacuum unit according to the invention will now be described with reference to Figs. 3-6. In the first embodiment, shown in Fig. 3, the vacuum unit, generally designated 1, comprises an inlet nozzle 10 and an outlet nozzle 20 making up an ejector. The configuration of these nozzles has been described above with reference to Figs. 1 and 2. Four external ports are provided in the unit: a port 50 for pressurized air P connected to the input of the inlet nozzle 10, a port 60 for release air R connected to the space S, a vacuum port 70 corresponding to the above described vacuum opening V, and a port 80 for exhaust air E connected to the output of the outlet nozzle 20. The ports 50, 60 for pressurized and release air, respectively, are connectable to a respective air source (not shown). The vacuum opening 70 is in communication with e.g., a suction cup of a work gripping tool. Finally, the exhaust port is in communication with the surrounding environment. Valves (not shown) for connecting and disconnecting the ports 50, 60 to the sources of pressurized and release air are provided externally of the vacuum unit 1.

In a second embodiment shown in Fig. 4, two air valves 30 and 40 are provided in the vacuum unit. These air valves are preferably so-called solenoid valves commonly used in the art. The first valve 30 is interconnected between the port 50 of pressurized air P and the input of the inlet nozzle 10. The second valve 40 is provided between the input of the inlet nozzle 10 and the space S. Thus the two ports 50, 60 for air of the first embodiment have been replaced by a single air port 50 and the operation of this vacuum unit is as follows. Thus, the port 50 for pressurized air is connected to the input of the first valve 30, wherein the output of the first valve is connected to the input of the second valve 40.

When operation is initiated, the first valve 30 is opened, letting pressurized air through the nozzles and creating vacuum in the vacuum opening V. This vacuum is maintained as long as the second valve 40 remains closed. When the second valve is opened, release operation is initiated and release air is let into the space S deflecting the pressurized air and rapidly creating an overpressure in the vacuum opening. When the second valve 40 is closed, release operation is terminated and vacuum rapidly builds up in the vacuum opening, switching the vacuum unit from release to suction operation.

Only the second valve 40 needs switching during operation of the vacuum unit, lessening wear and minimizing switching times. Since in some applications the release air flow is substantially smaller than the air flow through the first valve, the second valve can be dimensioned for small air flows, which from cost, weight, and volume perspectives is an advantage.

A third embodiment of a vacuum unit according to the invention is shown in Fig. 5. This embodiment is similar to the second embodiment in that there is only one single port 50 for air. The difference lies in that the second valve 40 is interconnected between the port 50 and the space S, i.e., in front of the first valve 30. Thus, the port 50 for pressurized air is connected both to the input of the first valve 30 and to the input of the second valve 40. The operation of this embodiment is identical to that of the second embodiment. However, since only the pressurized air P through the inlet nozzle passes through the first valve 30, this valve can be dimensioned for smaller air flows than in the second embodiment.

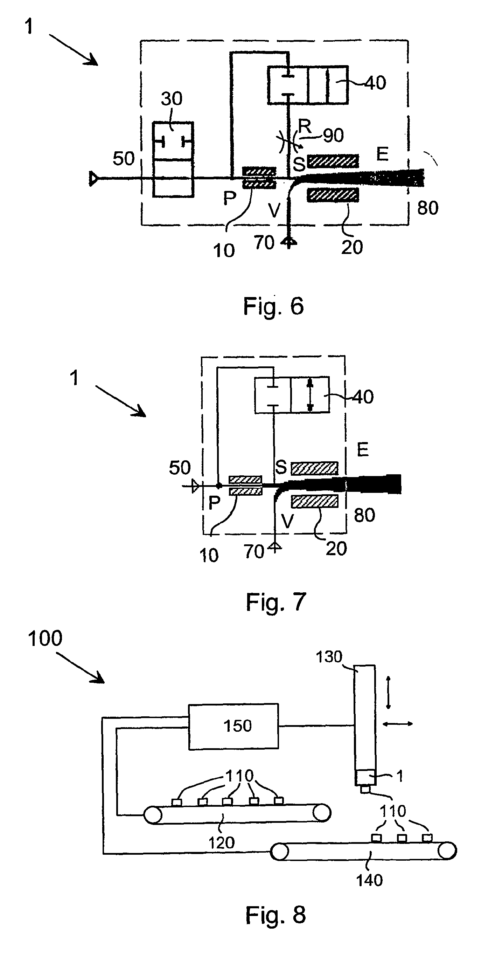

A fourth embodiment of a vacuum unit according to the invention is shown in Fig. 6. This is identical to the second embodiment shown in Fig. 4 with the addition of a throttle valve 90 after the second valve 40. The function of this valve is to regulate the force of the release air in order to optimize the performance of the vacuum unit. Such a throttle valve can alternatively be provided before the second valve. A throttle valve can also be provided in all embodiments of the invention.

A fifth embodiment of a vacuum unit according to the invention is shown in Fig. 7. This is identical to the second embodiments shown in Figs. 4 and 5 with the difference that the first valve 30 has been omitted. This provides for a vacuum unit having fewer components but retaining the general function of the other embodiments.

A system 100 comprising vacuum units according to the invention will now be described with reference to Fig. 8. This system is a so called pick and place system which is a conveyor belt application wherein good 110 are picked up from a first conveyor belt 120 by means of a pick up device 130 provided with a vacuum unit 1 according to the invention. The picked up goods is subsequently placed on a second conveyor belt 140. The operation of the system 100 is controlled by means of a control unit 150 connected to the conveyor belts 120, 130, and to the pick up device 130.

Other possible applications for a vacuum unit according to the invention includes, but is not limited to, stacking products in cases, surface mounting of electronic circuits, picking moulded products in injection moulding machines, placing and removing goods in press lines etc.

Although preferred embodiments of an inventive vacuum unit have been described, it will be understood that these embodiments can be altered in several respects within the scope of the accompanying claims. For instance, although the ejector of the described embodiments exhibits only one inlet nozzle and only one outlet nozzle, it will be understood that the ejector may include several inlet and outlet nozzles. This would enable a greater pressure generating capacity to be achieved, therewith shortening the cycle times.

Although the valves of the described vacuum units have been described as solenoid valves, it will be understood by the person skilled in this field that any suitable valves may be used. It will also be understood that a pressure sensor and a safety valve may be integrated with the vacuum unit.

The operation of the vacuum unit according to the invention has been described as involving an essentially constant air flow through the inlet nozzle, i.e., constant feeding of air to the port 50 for pressurized air. It will be appreciated that the feeding of air can be interrupted between operation cycles.

In the figures the release air is shown passing between the inlet and outlet nozzles. However, the release air can also pass partly through the nozzles without any departure from the inventive idea as defined in the appended claims as long as the release air deflects the air flow from the inlet nozzle away from the input of the outlet nozzle.

## Claims

1. A vacuum unit comprising:
- an inlet nozzle (10) having an input and an output, the input of which nozzle being connectable to a source of compressed air,
- an outlet nozzle (20) having an input and an output,
- a space (S) provided between the output of the inlet nozzle and the input of the outlet nozzle, and
- a vacuum opening (V) in connection with the space,
**characterised in that**
- the space has a connection to a source of release air (R) arranged at an angle to the output of the inlet nozzle, so that release air entering the space (S) deflects the air flow from the inlet nozzle away from the input of the outlet nozzle.

2. The vacuum unit according to Claim 1, wherein the inner diameter of the inlet nozzle (10) is smaller than inner diameter of the outlet nozzle (20).

3. The vacuum unit according to Claim 1 or 2, comprising:
- a first valve (30) comprising an input and an output and having a closed position and an open position, wherein the input of the first valve is connectable to a compressed-air source ;
- a second valve (40) comprising an input and an output and having a closed position and an open position, wherein the input of the second valve is connectable to a compressed-air source;
- wherein the output of the first valve is connected to the input of the inlet nozzle (10) and the output of the second valve is connected to the connection to a source of release air (R).

4. The vacuum unit according to claim 3, comprising a port (50) for inlet air connected to the input of the first valve (30), wherein the output of the first valve is connected to the input of the second valve (40).

5. The vacuum unit according to claim 3, comprising a port (50) for inlet air connected to the input of the first valve (30) and to the input of the second valve (40).

6. The vacuum unit according to Claim 1 or 2, comprising:
- a valve (40) comprising an input and an output and having a closed position and an open position, wherein the input of the second valve is connectable to a compressed-air source;
- wherein the output of the second valve is connected to the connection to a source of release air (R).

7. The vacuum unit according to any of Claims 1-6, wherein the output of the inlet nozzle (10) and the connection to a source of release air (R) are provided at right angles to each other.

8. The vacuum unit according to any of Claims 1-7, comprising a throttle valve (90) connected to the connection to a source of release air (R).

9. A vacuum system comprising a vacuum unit according to claim 1.

10. A method of operating a vacuum unit, comprising the following steps:
- providing a flow of compressed air (P) through an inlet nozzle (10) having an input and an output,
- passing the flow of compressed air across a space (S) to an input of an outlet nozzle (20) having an input and an output, so as to create a vacuum in a vacuum opening (V) in connection with the space,
**characterised by** the step of
- providing a flow of release air (R) to the space so that this release air entering the space (S) deflects the air flow from the inlet nozzle away from the input of the outlet nozzle.

## Patentansprüche

1. Eine Vakuumeinheit umfassend:
- eine Einlassdüse (10) mit einem Einlass und einem Auslass, wobei der Einlass der Düse mit einer Druckluftquelle verbindbar ist,
- eine Auslassdüse (20) mit einem Einlass und einem Auslass,
- einen Raum (S) zwischen dem Auslass der Einlassdüse und dem Einlass der Auslassdüse, und
- eine Vakuumöffnung (V) in Verbindung mit dem Raum,
**dadurch gekennzeichnet, dass**
- der Raum eine Verbindung mit einer Entlastungsluftquelle (R) aufweist, die mit einem Winkel zu dem Auslass der Einlassdüse angeordnet ist, so dass Entlastungsluft, welche den Raum (S) betritt, den Luftfluss von der Einlassdüse weg von dem Einlass der Auslassdüse ablenkt.

2. Vakuumeinheit nach Anspruch 1, bei welcher der Innendurchmesser der Einlassdüse (10) kleiner als der Innendurchmesser der Auslassdüse (20) ist.

3. Vakuumeinheit nach Anspruch 1 oder 2, umfassend:
- eine erstes Ventil (30) mit einem Einlass und einem Auslass und einer geschlossenen Position und einer offenen Position, wobei der Einlass des ersten Ventils mit einer Druckluftquelle verbindbar ist;
- ein zweites Ventil (40) mit einem Einlass und einem Auslass und einer geschlossenen Position und einer offenen Position, wobei der Einlass des zweiten Ventils mit einer Druckluftquelle verbindbar ist,
- wobei der Auslass des ersten Ventils mit dem Einlass der Einlassdüse (10) verbunden ist und der Auslass des zweiten Ventils mit der Verbindung zu einer Entlastungsluftquelle (R) verbunden ist.

4. Vakuumeinheit nach Anspruch 3, umfassend einen Anschluss (50) für die Einlassluft, der mit dem Einlass des ersten Ventils (30) verbunden ist, wobei der Auslass des ersten Ventils mit dem Einlass des zweiten Ventils (40) verbunden ist.

5. Vakuumeinheit nach Anspruch 3, umfassend einen Anschluss (50) für die Einlassluft, der mit dem Einlass des ersten Ventils (30) und mit dem Einlass des zweiten Ventils (40) verbunden ist.

6. Vakuumeinheit nach Anspruch 1 oder 2, umfassend:
- ein Ventil (40) mit einem Einlass und einem Auslass und einer geschlossenen Position und einer offenen Position, wobei der Einlass des zweiten Ventils mit einer Druckluftquelle verbindbar ist;
- wobei der Auslass des zweiten Ventils mit der Verbindung zu einer Entlastungsluftquelle (R) verbunden ist.

7. Vakuumeinheit nach irgendeinem der Ansprüche 1 bis 6, bei welcher der Auslass der Einlassdüse (10) und die Verbindung zu einer Entlastungsluftquelle (R) mit rechten Winkeln zueinander bereitgestellt sind.

8. Vakuumeinheit nach irgendeinem der Ansprüche 1 bis 7, umfassend ein Drosselventil (90), welches mit der Verbindung zu einer Entlastungsluftquelle (R) verbunden ist.

9. Vakuumsystem umfassend eine Vakuumeinheit nach Anspruch 1.

10. Verfahren zum Betreiben einer Vakuumeinheit, umfassend die folgenden Schritte:
- Bereitstellen eines Druckluftflusses (P) durch eine Einlassdüse (10) mit einem Einlass und einem Auslass,
- Führen des Druckluftflusses durch einen Raum (S) in einen Einlass einer Auslassdüse (20) mit einem Einlass und einem Auslass, um ein Vakuum in einer Vakuumöffnung (V) in Verbindung mit dem Raum zu erzeugen,
**gekennzeichnet durch** folgenden Schritt
- Bereitstellen eines Entlastungsluftflusses (R) zu dem Raum, so dass diese Entlastungsluft den Raum (S) betritt und den Luftfluss von der Einlassdüse weg von dem Einlass der Auslassdüse ablenkt.

## Revendications

1. Un ensemble d'aspiration comprenant :
- une buse d'entrée (10) possédant une entrée et une sortie, l'entrée de cette buse pouvant être reliée à une source d'air comprimé,
- une buse de sortie (20) possédant une entrée et une sortie,
- un intervalle (S) prévu entre la sortie de la buse d'entrée et l'entrée de la buse de sortie, et
- une ouverture d'aspiration (V) en liaison avec l'intervalle,
**caractérisé en ce que** :
- l'intervalle possède une liaison avec une source d'air d'échappement (R) disposée en formant un angle avec la sortie de la buse d'entrée, de sorte que l'air d'échappement entrant dans l'intervalle (S) dévie le flux d'air provenant de la buse d'entrée en éloignement de l'entrée de la buse de sortie.

2. L'ensemble d'aspiration selon la revendication 1, dans lequel le diamètre intérieur de la buse d'entrée (10) est inférieur au diamètre intérieur de la buse de sortie (20).

3. L'ensemble d'aspiration selon la revendication 1 ou 2, comprenant :
- une première vanne (30) comprenant une entrée et une sortie et possédant une position ouverte et une position fermée, l'entrée de la première vanne pouvant être reliée à une source d'air comprimé ;
- une seconde vanne (40) comprenant une entrée et une sortie et possédant une position ouverte et une position fermée, l'entrée de la seconde vanne pouvant être reliée à une source d'air comprimé ;
- dans lequel la sortie de la première vanne est reliée à l'entrée de la buse d'entrée (10) et la sortie de la seconde vanne est reliée à la liaison à une source d'air d'échappement (R).

4. L'ensemble d'aspiration selon la revendication 3, comprenant un orifice (50) pour l'entrée d'air relié à l'entrée de la première vanne (30), la sortie de la première vanne étant reliée à l'entrée de la seconde vanne (40).

5. L'ensemble d'aspiration selon la revendication 3, comprenant un orifice (50) pour l'entrée d'air reliée à l'entrée de la première vanne (30) et à l'entrée de la seconde vanne (40).

6. L'ensemble d'aspiration selon la revendication 1 ou 2, comprenant :
- une vanne (40) comprenant une entrée et une sortie et possédant une position ouverte et une position fermée, l'entrée de la seconde vanne pouvant être reliée à une source d'air comprimé ;
- dans lequel la sortie de la seconde vanne est reliée à la liaison à une source d'air d'échappement (R).

7. L'ensemble d'aspiration selon l'une des revendications 1 à 6, dans lequel la sortie de la buse d'entrée (10) et la liaison à une source d'air d'échappement (R) sont disposées à angle droit l'une par rapport à l'autre.

8. L'ensemble d'aspiration selon l'une des revendications 1 à 7, comprenant une vanne d'étranglement (90) reliée à la liaison à une source d'air d'échappement (R).

9. Un système d'aspiration comprenant un ensemble d'aspiration selon la revendication 1.

10. Un procédé de mise en oeuvre d'un ensemble d'aspiration, comprenant les étapes suivantes :
- établir un flux d'air comprimé (P) au travers d'une buse d'entrée (10) possédant une entrée et une sortie,
- faire passer le flux d'air comprimé au travers d'un intervalle (S) vers une entrée d'une buse de sortie (20) possédant une entrée et une sortie, de manière à créer une aspiration dans une ouverture d'aspiration (V) en liaison avec l'intervalle,
**caractérisé par** l'étape consistant à :
- établir un flux d'air d'échappement (R) vers l'intervalle de sorte que cet air d'échappement entrant dans l'intervalle (S) dévie le flux d'air provenant de la buse d'entrée en éloignement de l'entrée de la buse de sortie.
